# EUROPÄISCHE PATENTSCHRIFT

(11) **EP 3 318 689 B1**
(45) Veröffentlichungstag und Bekanntmachung des Hinweises auf die Patenterteilung: **03.04.2019**
(21) Anmeldenummer: 16197615.4
(22) Anmeldetag: 07.11.2016
(51) Int. Cl.: E04C 5/07, E04F 13/06

(54) **BEWEHRUNGSGITTERELEMENT, BAUKÖRPER MIT EINEM SOLCHEN BEWEHRUNGSGITTERELEMENT SOWIE VERFAHREN ZUR HERSTELLUNG EINES BEWEHRUNGSGITTERELEMENTS**
REINFORCEMENT GRID ELEMENT, STRUCTURE HAVING SUCH A REINFORCEMENT GRID ELEMENT AND METHOD FOR PRODUCING A REINFORCEMENT GRID ELEMENT
ÉLÉMENT DE TREILLIS D'ARMATURE, OUVRAGE COMPRENANT UN TEL ÉLÉMENT DE TREILLIS D'ARMATURE ET PROCÉDÉ DE FABRICATION D'UN ÉLÉMENT DE TREILLIS D'ARMATURE

(43) Veröffentlichungstag der Anmeldung: 09.05.2018
(73) Patentinhaber: Solidian GmbH, 72458 Albstadt (DE)
(72) Erfinder: Pfaff, Johann, DE - 72474 Winterlingen (DE); Werz, Frank, DE - 72820 Sonnenbühl-Undingen (DE)
(74) Vertreter: Rüger Abel

(56) Entgegenhaltungen:
- EP-A- 1 094 171
- WO-A-97/19226
- US-A- 3 515 623

## Beschreibung

Die Erfindung betrifft ein Bewehrungsgitterelement für einen Baukörper, das dazu eingerichtet ist, in eine Zementmatrix bzw. Betonmatrix eines Baukörpers eingebettet zu werden, sowie ein Verfahren zur Herstellung eines solchen Bewehrungsgitterelements. Die Erfindung betrifft außerdem einen Baukörper, der wenigstens ein Bewehrungsgitterelement aufweist.

Bewehrte Baukörper und entsprechende Bewehrungsgitterelemente sind bekannt. Bewehrungen können durch Textilelemente oder Stahlelemente gebildet sein.

DE 3 430 614 C2 beschreibt einen sogenannten Einputzwinkel. Solche Einputzwinkel weisen ebenfalls gitterförmige Abschnitte auf und haben gegenüber Bewehrungsgittern für Baukörper, bei denen die Zugspannungsfestigkeit zur Erhöhung der Traglast verbessert werden soll, deutlich geringere Maschenweiten. Die Einputzwinkel dienen dazu, den Eckbereich eines Untergrunds für eine Sichtputzschicht zu bilden, um das Auftragen des Sichtputzes und dessen Anhaftung zu verbessern. Bei dem bekannten Einputzwinkel ist ein Glasfasergewebestreifen vorhanden, der eine Eckversteifung mit einem zusätzlichen Versteifungselement aufweist. Ein ähnlicher Einputzwinkel ist auch aus EP 1 514 978 A2 sowie DE 3 621 235 A1 bekannt.

EP 1 281 822 A1 beschreibt eine Profilleiste aus extrudiertem Kunststoff mit einem daran befestigten netzartigen Gittergewebestreifen zur Bildung eines Winkelprofils.

Im Unterschied zu solchen Einputzwinkeln, die als Zwischenlage zwischen einem Baukörper und einer Putzschicht aufgebracht werden, beschäftigt sich die vorliegende Erfindung mit der Verbesserung eines Bewehrungsgitterelements, das zum Einbetten in eine Zementmatrix eines Baukörpers eingerichtet ist und dessen Zugfestigkeit bzw. Biegesteifigkeit in einem Eckbereich und/oder Krümmungsbereich erhöhen soll. Das Bewehrungsgitterelement soll insbesondere eine verbesserte Handhabung bei der Herstellung eines Baukörpers ermöglichen. EP 1 094 171 A beschreibt ein Bewehrungsgitterelement gemäß dem Oberbegriff des Anspruchs 1.

Diese Aufgabe wird durch ein Bewehrungsgitterelement mit den Merkmalen des Patentanspruches 1, durch einen Baukörper mit den Merkmalen des Patentanspruches 14 sowie ein Verfahren mit den Merkmalen des Patentanspruches 15 gelöst.

Ein erfindungsgemäßes Bewehrungsgitterelement ist dazu eingerichtet, in eine Zementmatrix oder Betonmatrix eines Baukörpers eingebettet zu werden. Der Baukörper kann fabrikseitig vorgefertigt sein, beispielsweise ein vorgefertigtes Betonteil, das zur Errichtung eines Bauwerks an die Baustelle geliefert wird, oder der Baukörper kann unter Verwendung des Bewehrungsgitterelements vor Ort erstellt werden. Als Zementmatrix kann beispielsweise Ortbeton, Spritzbeton oder Mörtel verwendet werden.

Das Bewehrungsgitterelement hat eine gitterförmige Anordnung mit Faserbündeln, die in eine Kunststoffmatrix eingebettet sind. Hierfür können die Faserbündel beispielsweise mit einem Kunststoff getränkt werden, der anschließend ausgehärtet wird. Die Faserbündel der gitterförmigen Anordnung bilden wenigstens zwei Gruppen. Eine Gruppe von Faserbündeln erstreckt sich in eine erste Richtung und eine weitere Gruppe von Faserbündeln erstreckt sich in eine zweite Richtung. Die beiden Richtungen können schräg oder rechtwinklig zueinander orientiert sein, so dass die beiden Gruppen Kreuzungsstellen zwischen einzelnen Faserbündeln bilden. Jedes Faserbündel ist im Wesentlichen gestreckt. Vorzugsweise bilden die Gruppen von Faserbündeln ein Gelege. Darunter ist eine Anordnung zu verstehen, bei dem eine Gruppe von Faserbündeln von einer Seite an eine benachbarte Gruppe von Faserbündeln gelegt wird und an den Kreuzungsstellen durch Verbindungsmittel, wie etwa Fäden oder dergleichen, verbunden werden kann. Die Faserbündel einer Gruppe sind nur auf einer Seite der benachbarten Gruppe angeordnet und wechseln nicht die Seite, wie es etwa bei einem Gewebe der Fall wäre. Durch das Gelege wird die Streckung der Faserbündel in deren jeweiliger Erstreckungsrichtung verbessert und die Welligkeit verringert.

Die Faserbündel einer gemeinsamen Gruppe erstrecken sich vorzugsweise jeweils parallel zueinander.

Die gitterförmige Anordnung hat Maschen, die durch die kunststoffgetränkten Faserbündel gebildet sind. Beispielsweise können die Maschen eine etwa quadratischen oder rechteckigen Form haben. Die Maschenweite beträgt dabei vorzugsweise mindestens 10 mm mal mindestens 10 mm und beispielsweise mindestens 20 mm mal mindestens 20 mm bis maximal 30 mm mal maximal 30 mm. Abweichend von der rechteckförmigen Maschenform können auch beliebig andere Maschenformen gebildet werden. Dies hängt auch davon ab, wie viele Gruppen von Faserbündeln zur Bildung der gitterförmigen Anordnung verwendet werden.

Das Bewehrungsgitterelement hat wenigstens eine starre Zone und wenigstens eine flexible Zone. Das gesamte Bewehrungsgitterelement lässt sich vorzugsweise in die wenigstens eine starre und die wenigstens eine flexible Zone unterteilen, so dass weitere Bereiche oder Zonen nicht vorhanden sind. Sämtliche vorhandenen starren Zonen haben vorzugsweise denselben konstruktiven Aufbau. Sämtliche vorhandenen flexiblen Zonen haben vorzugsweise denselben konstruktiven Aufbau.

In der wenigstens einen flexiblen Zone sind die Faserbündel in eine Kunststoffmatrix aus einem elastomeren Kunststoff eingebettet. Der elastomere Kunststoff kann Kautschuk enthalten oder durch Kautschuk gebildet sein. Der Kautschuk kann beispielsweise aus Styrol-Butadien-Kautschuk (SBR) und/oder Chloropren-Kautschuk (CR) und/oder Ethylen-Propylen-Dien-Kautschuk (EPDM) bestehen. Das Bewehrungsgitterelement ist dadurch in der flexiblen Zone um wenigstens eine Biegekante oder einen Biegebereich biegbar. Beispielsweise kann das Bewehrungsgitterelement durch eine solche flexible Zone in die Form eines Winkels gebracht werden oder an eine Rundung bzw. einen Radius des Baukörpers angepasst werden.

In der starren Zone weist die Kunststoffmatrix einen duromeren Kunststoff auf. Dieser kann ein Kunstharz enthalten oder durch ein Kunstharz gebildet sein. Beispielsweise kann es sich bei dem Kunstharz um Epoxidharz und/oder Polyurethanharz handeln.

Jedes Faserbündel weist eine Mehrzahl von Fasern und/oder Filamenten auf. Diese können aus Aramid und/oder Glas und/oder Carbon bestehen. Bei einer bevorzugten Ausführungsform mit der sich besonders hohe Bruchspannungen erreichen lassen, sind die Faserbündel durch Filamente aus Carbon gebildet und in der starren Zone mit Epoxidharz beschichtet. Der Kunststoff in der flexiblen Zone ist dabei vorzugsweise durch Styrol-Butadien-Kautschuk gebildet.

Das Bewehrungsgitter wird somit durch eine Anordnung und vorzugsweise ein Gelege aus Faserbündeln gebildet, die in den unterschiedlichen Zonen mit unterschiedlichen Kunststoffen getränkt und/oder beschichtet sind. Dadurch lässt sich ein einheitliches Bewehrungsgitterelement erhalten, das frei ist von zusätzlichen Versteifungsbauteilen. Insbesondere kann die Gitterstruktur bzw. die Maschenweite des Bewehrungsgitterelements in der wenigstens einen flexiblen Zone und in der wenigstens einen starren Zone im Wesentlichen gleich groß sein. Die Fläche, die von einer Masche der gitterförmigen Anordnung in der starren Zone begrenzt wird, weicht insbesondere um maximal 5-10% von der Fläche ab, die die Maschen der gitterförmigen Anordnung in der wenigstens einen flexiblen Zone begrenzen, wenn der Abstand der Kreuzungsstellen der gitterförmigen Anordnung bzw. der Abstand der Faserbündel einer Gruppe in der flexiblen und der starren Zone gleich groß ist. Das Bewehrungsgitterelement hat durch den erfindungsgemäßen Aufbau auch eine im Wesentlichen konstante Dicke.

Beispielsweise kann das Bewehrungsgitterelement wenigstens eine und vorzugsweise eine flexible Zone aufweisen, das sich in eine Richtung, beispielsweise in der ersten Richtung oder der zweiten Richtung, vollständig über das Bewehrungsgitterelement erstreckt. Diese flexible Zone kann auf gegenüberliegenden Seiten durch jeweils eine starre Zone begrenzt werden, wobei die beiden starren Zonen durch die dazwischen angeordnete flexible Zone vollständig voneinander getrennt und nicht miteinander verbunden sind. Die Breite der flexiblen Zone entspricht dabei dem Abstand zwischen den beiden starren Zonen. Diese Breite der flexiblen Zone kann in etwa der Maschenweite der gitterförmigen Anordnung entsprechend und mithin relativ klein sein. Dadurch wird beim Biegen ein kleiner Radius in der flexiblen Zone gebildet, so dass das Bewehrungsgitterelement einen Bewehrungswinkel für rechtwinklige Ecken bildet. Wird die Breite der flexiblen Zone und mithin der Abstand zwischen den starren Zonen größer gewählt, kann das Bewehrungsgitterelement an einen größeren Radius bzw. eine Rundung des Baukörpers angepasst werden.

Bei einem weiteren Ausführungsbeispiel weist das Bewehrungsgitterelement eine und vorzugsweise genau eine starre Zone auf, die sich in einer Richtung, beispielsweise in der ersten Richtung oder der zweiten Richtung vollständig über das Bewehrungsgitterelement erstreckt. Das Bewehrungsgitterelement kann zwei flexible Zonen aufweisen, die durch eine dazwischen angeordnete starre Zone vollständig voneinander getrennt und mithin nicht miteinander verbunden sind. Ein solches Bewehrungsgitterelement hat in der starren Zone eine vorgegebene, beispielsweise abgewinkelte Form. Im Anschluss an diesen starren Bereich mit einer definierten Form, weist es jeweils eine flexible Zone auf. Diese flexible Zone lässt sich an unterschiedliche Formen und Gestaltungen des Baukörpers anpassen, beispielsweise im Anschluss an eine Ecke des Baukörpers.

Es ist vorteilhaft, wenn die wenigstens eine flexible Zone und die wenigstens eine angrenzende starre Zone einen Überlappungsbereich aufweisen. Insbesondere weist jeder Übergang von einer flexiblen Zone zu einer angrenzenden starren Zone einen Überlappungsbereich auf, in dem sich sowohl elastomerer Kunststoff, als auch duromerer Kunststoff befindet. Dabei kann es vorteilhaft sein, wenn der elastomere Kunststoff an seiner Außen- oder Mantelfläche zumindest teilweise durch den duromeren Kunststoff abgedeckt bzw. beschichtet ist. Dies kann beispielsweise dadurch erreicht werden, dass zunächst der elastomere Kunststoff als Kunststoffmatrix zumindest in der wenigstens einen flexiblen Zone aufgebracht und anschließend der duromere Kunststoff in der wenigstens einen starren Zone aufgebracht wird.

Bei einem Ausführungsbeispiel kann die Kunststoffmatrix in der starren Zone aus einem duromeren Kunststoff gebildet sein. Die starre Zone ist dabei - abgesehen vom Überlappungsbereich - frei von dem elastomeren Kunststoff einer angrenzenden flexiblen Zone. Dies kann beispielsweise dadurch erreicht werden, dass der elastomere Kunststoff nur in der wenigstens einen flexiblen Zone und der duromere Kunststoff nur in der wenigstens einen starren Zone aufgebracht wird. Dies kann in beliebiger Reihenfolge geschehen.

Bei einem Ausführungsbeispiel kann die Kunststoffmatrix in der starren Zone einen die Faserbündel tränkenden elastomeren Kunststoff aufweisen, der an seiner Außenfläche zumindest teilweise mit einem duromeren Kunststoff beschichtet ist. Dieser Aufbau kann beispielsweise dadurch erreicht werden, dass zunächst sämtliche Faserbündel der gitterförmigen Anordnung in allen Zonen mit dem elastomeren Kunststoff getränkt wird und anschließend lediglich die wenigstens eine starre Zone mit einem duromeren Kunststoff beschichtet wird. Dies hat den Vorteil, dass eine Maskierung der Faserbündel beim Tränken mit dem elastomeren Kunststoff nicht erforderlich ist. Die Faserbündel werden vollständig durch den elastomeren Kunststoff geschützt, beispielsweise auch vor chemischen Reaktionen mit der Zementmatrix eines Baukörpers. Der duromere Kunststoff dient dabei hauptsächlich zur Formgebung in der wenigstens einen starren Zone und kann daher insbesondere im Hinblick auf diese Eigenschaft ausgewählt werden.

Zur Herstellung eines Bewehrungsgitterelements wird wie folgt vorgegangen:

Zunächst wird eine gitterförmige Anordnung aus Faserbündeln bereitgestellt. Die Faserbündel werden zumindest in dem Bereich, der später die wenigstens eine flexible Zone bildet, mit dem elastomeren Kunststoff getränkt. Es ist dabei auch möglich, die gesamte gitterförmige Anordnung mit dem elastomeren Kunststoff zu tränken, als auch in dem Bereich, der später die wenigstens eine starre Zone bildet. Anschließend wird der elastomere Kunststoff vorzugsweise ausgehärtet. Anschließend werden die Faserbündel in dem Bereich, der später die wenigstens eine starre Zone des Bewehrungsgitterelements bildet, mit einem duromeren Kunststoff getränkt bzw. sofern sie bereits mit dem elastomeren Kunststoff getränkt sind, mit dem duromeren Kunststoff beschichtet. Anschließend wird der duromere Kunststoff zur Bildung der starren Zone ausgehärtet.

Alternativ hierzu kann bei einem anderen Ausführungsbeispiel des Verfahrens zunächst ein Tränken der Faserbündel in dem Bereich erfolgen, der später die wenigstens eine starre Zone bildet. Anschließend kann der Bereich, der später die wenigstens eine flexible Zone bildet, mit dem elastomeren Kunststoff getränkt werden. Es ist weiterhin auch möglich, nach dem Tränken des Bereichs mit dem duromeren Kunststoff, der später die starre Zone bildet, die gesamte gitterförmige Anordnung mit dem elastomeren Kunststoff zu tränken bzw. zu beschichten. Auch bei diesem Vorgehen kann der duromere Kunststoff vor dem Auftragen des elastomeren Kunststoff zunächst ausgehärtet werden.

Ein Baukörper kann wenigstens ein solches Bewehrungsgitterelement aufweisen, wie es vorstehend beschrieben wurde. Das wenigstens eine Bewehrungsgitterelement wird zur Herstellung des Baukörpers in die noch nicht ausgehärtete Zementmatrix eingelegt und die Zementmatrix wird anschließend ausgehärtet. Dies kann entfernt von der Baustelle eines Bauwerks erfolgen und der Baukörper kann als vorgefertigtes Teil angeliefert werden. Es ist auch möglich, den Baukörper vor Ort an der Baustelle herzustellen.

Bei dem Baukörper kann es sich um einen lasttragenden Baukörper handeln.

Der Baukörper kann beispielsweise als Betonkörper ausgeführt sein. Der Betonkörper hat eine Betonmatrix aus Zement und einer Gesteinskörnung und kann optional Betonzusatzstoffe und/oder Betonzusatzmittel aufweisen.

Weitere vorteilhafte Ausführungen der Erfindung ergeben sich aus den abhängigen Patentansprüchen, der Beschreibung und den Zeichnungen. Nachfolgend werden bevorzugte Ausführungsbeispiele anhand der beigefügten Zeichnungen im Einzelnen erläutert. Es zeigen:
Figur 1 eine stark schematisierte Darstellung eines Ausführungsbeispiels eines Bewehrungsgitterelements mit Blickrichtung quer zu einer Längsrichtung und quer zu einer Querrichtung,
Figur 2 eine schematische perspektivische Darstellung des Bewehrungsgitterelements aus Figur 1, wobei eine flexible Zone im Bereich einer Biegekante gebogen ist,
Figur 3 eine stark schematisierte perspektivische Darstellung eines weiteren Ausführungsbeispiels eines Bewehrungsgitterelements mit einer im Bereich einer Biegekante abgewinkelten starren Zone, an die sich jeweils eine flexible Zone anschließt,
Figur 4 das Ausführungsbeispiel des Bewehrungsgitterelements aus Figur 3 in einer schematischen Draufsicht,
Figur 5 eine schematische Prinzipdarstellung eines Ausführungsbeispiels eines Geleges aus zwei Gruppen von Faserbündeln, die in eine Kunststoffmatrix eingebettet sind,
Figur 6 einen Querschnitt durch ein Faserbündel aus Figur 5 gemäß Schnittlinie VI-VI,
Figur 7 das Gelege aus Figur 5 in einer stark schematisierten Seitenansicht,
Figuren 8 und 9 jeweils eine schematische Prinzipdarstellung zum Tränken bzw. Aufbringen eines Kunststoffs in bestimmten Bereichen eines Geleges aus Faserbündeln,
Figuren 10 und 11 jeweils eine schematisierte Schnittdarstellung in einem Überlappungsbereich eines Bewehrungsgitters, in dem eine starre Zone und eine flexible Zone ineinander übergehen und
Figur 12 eine vereinfachte schematische Darstellung einer beispielhaften Ausführungsform eines Baukörpers mit mehreren Bewehrungsgitterelementen in einer Schnittdarstellung.

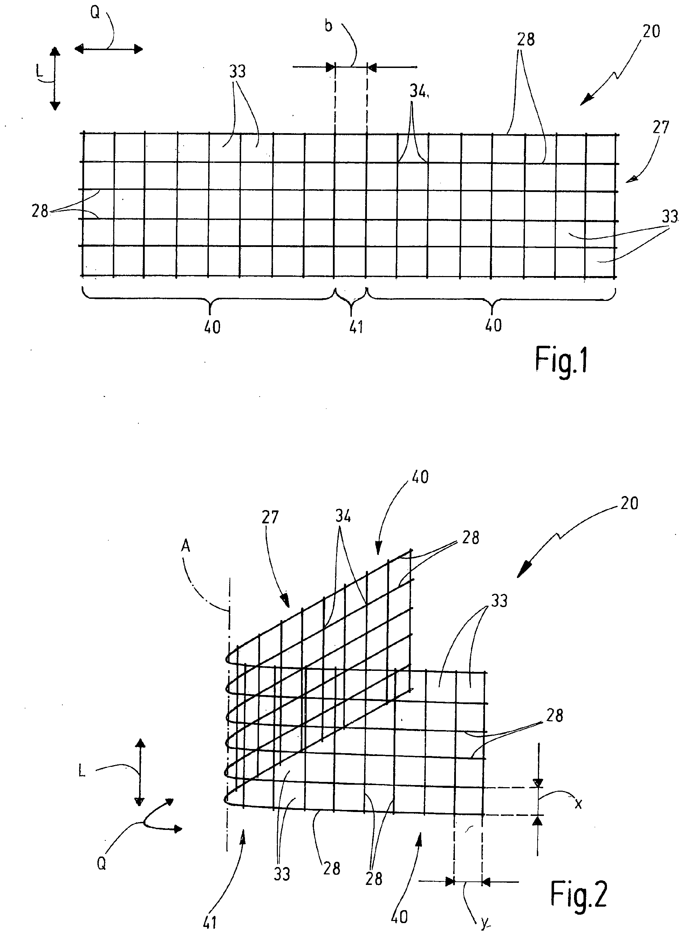

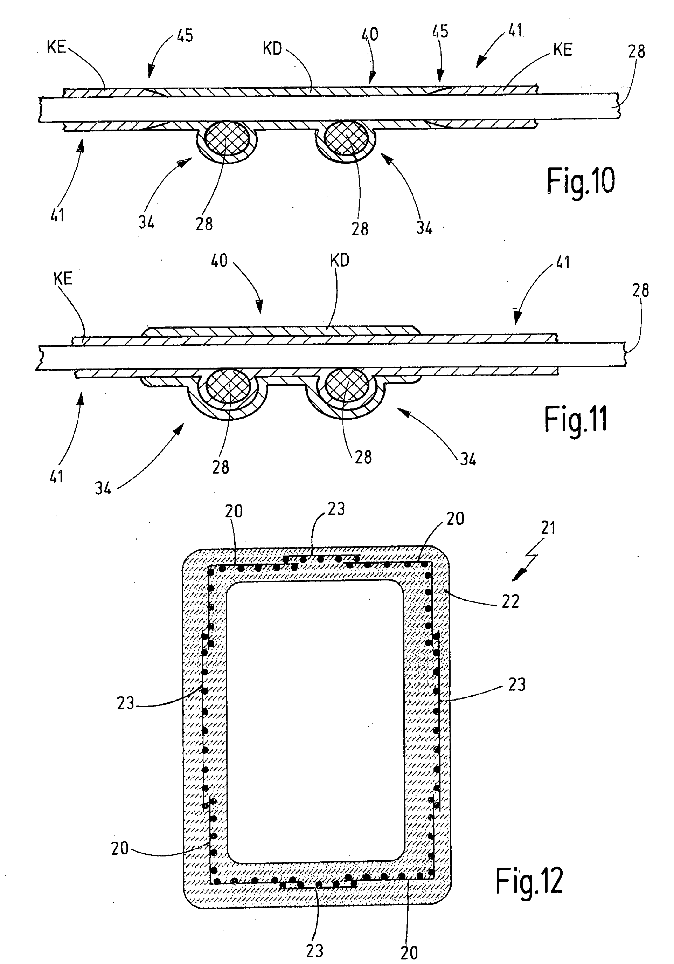

In den Figuren 1-4 sind stark schematisiert unterschiedliche Ausführungsbeispiele eines Bewehrungsgitterelements 20 veranschaulicht, das zur Herstellung eines Baukörpers 21 eingerichtet ist. Ein beispielhafter Baukörper 21 ist in Figur 12 gezeigt. Dort sind vier Bewehrungsgitterelements 20 gemäß einem erfindungsgemäßen Ausführungsbeispiel in eine Zementmatrix 22 eingebettet. Die erfindungsgemäßen Bewehrungsgitterelemente 20 dienen dazu, die Zugsteifigkeit bzw. Biegesteifigkeit des Baukörpers in Eckbereichen oder gekrümmten Bereichen zu verbessern. Die Bewehrungsgitterelemente 20 können, wie es in Figur 12 schematisch gezeigt ist, mit zusätzlichen, herkömmlichen Bewehrungen 23 in die Zementmatrix 22 integriert werden. In Figur 12 ist der Baukörper 21 lediglich beispielhaft durch einen ringförmig geschlossenen Körper, beispielsweise durch einen Betonring gebildet, wie er etwa für den Aufbau eines Schachts verwendet wird. Grundsätzlich kann der Baukörper 21 jede beliebige Gestalt mit Ecken und/oder Krümmungen aufweisen.

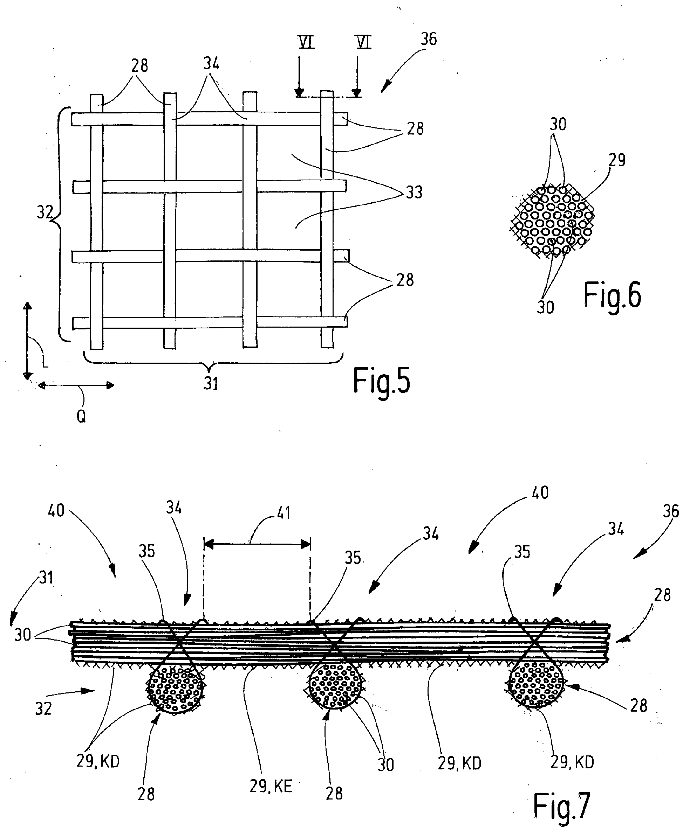

Zur Bildung der gitterförmigen Struktur weist das Bewehrungsgitterelement 20 eine gitterförmige Anordnung 27 aus Faserbündeln 28 auf, die in eine Kunststoffmatrix 29 eingebettet sind. Die Kunststoffmatrix 29 ist stark schematisiert in den Figuren 6 und 7 durch eine Kreuzschraffur veranschaulicht. Die Kunststoffmatrix 29 umgibt die Fasern und/oder Filamente 30 des betreffenden Kunststofffaserbündels 28 und stellt auch eine Verbindung zwischen den einzelnen Fasern und/oder Filamenten 30 her. Beim Ausführungsbeispiel werden für die Kunststofffaserbündel 28 Filamente 30 eingesetzt, die beispielsweise aus Aramid und/oder Carbon und/oder Glas bestehen. Für die Kunststoffmatrix 29 werden unterschiedliche Kunststoffe verwendet, was nachfolgend im Einzelnen noch erläutert wird.

Die Faserbündel 28 bilden wenigstens eine erste Gruppe 31 und eine zweite Gruppe 32. Die Faserbündel 28 einer gemeinsamen Gruppe 31 bzw. 32 erstrecken sich im Wesentlichen parallel zueinander in dieselbe Richtung. Beispielsweise erstrecken sich die Faserbündel 28 der ersten Gruppe 31 in eine Längsrichtung L und die Faserbündel 28 der zweiten Gruppe 32 in eine Querrichtung Q. Die Längsrichtung L und die Querrichtung Q sind beim Ausführungsbeispiel rechtwinklig zueinander ausgerichtet. Der Abstand unmittelbar benachbarter Faserbündel 28 ist in einer Gruppe 31 bzw. 32 beim Ausführungsbeispiel gleich groß. Dadurch ergibt sich eine gitterförmige Anordnung 27 mit quadratischen oder rechteckförmigen Maschen 33. Die Maschen 33 sind bei den hier beschriebenen Ausführungsbeispielen gleich groß. Es wäre auch möglich, die Maschen 33 in unterschiedlichen Bereichen durch entsprechende Variation des Abstandes der benachbarten Faserbündel 28 zu variieren. Beim Ausführungsbeispiel hat jede Maschine in Längsrichtung L eine Länge x und in Querrichtung Q eine Breite y. Die Länge x und die Breite y sind vorzugsweise größer als 10 mm und weiter vorzugsweise größer als 20 mm. Bei einem Ausführungsbeispiel kann die Länge x und die Breite y 21 mm betragen. Die Länge x und die Breite y betragen vorzugsweise höchstens 30 mm.

Die Faserbündel 28 können an den Kreuzungsstellen 34, an denen sich die Faserbündel 28 der beiden Gruppen 31 und 32 kreuzen, miteinander verbunden sein. Als Verbindungsmittel kann beispielsweise ein Verbindungsfaden 35 verwendet werden (Figuren 5 und 7). Das Verbindungsmittel bzw. der Verbindungsfaden 35 dient dazu, die Faserbündel 18 in ihrer Relativlage vor dem Tränken mit einem Kunststoff zu fixieren. An den Kreuzungsstellen 34 können die sich kreuzenden Faserbündel 28 nach dem Tränken und Aushärten der Kunststoffmatrix 29 auch stoffschlüssig miteinander verbunden sein.

Die Maschen 33 bilden Durchbrechungen des Bewehrungsgitterelements 20, so dass der noch nicht ausgehärtete Zement der Zementmatrix 22 durch die Maschen 33 fließt und das Bewehrungsgitterelement 20 nach dem Aushärten fest in den Baukörper 21 einbettet.

Wie es in den Figuren 5 und 7 veranschaulicht ist, bilden die Faserbündel 28 bzw. die beiden Gruppen 31 und 32 ein Gelege 36. Die erste Gruppe 31 der Faserbündel 28 ist in einer ersten Lage und die zweite Gruppe 32 der Faserbündel 28 in einer benachbarten 2. Lage angeordnet. Die Faserbündel 28 bleiben in ihrer jeweiligen Lage und wechseln mit Bezug auf die jeweils benachbarte Lage nicht die Seite. Mit anderen Worten ist die eine, erste Gruppe 31 von Faserbündeln 28 von einer Seite her an die andere, zweite Gruppe 32 von Faserbündeln 28 gelegt und an den Kreuzungsstellen 34 verbunden. Die Faserbündel 28 bilden somit das Gelege 36.

Das Bewehrungsgitterelement 20 ist unterteilt in wenigstens eine starre Zone 40 und wenigstens eine flexible Zone 41. Die Kunststoffmatrix 29 ist in einer flexiblen Zone 41 verschieden von der Kunststoffmatrix 29 in einer starren Zone 40. Die Kunststoffmatrix 29 ist in der flexiblen Zone 41 durch einen elastomeren Kunststoff KE gebildet. In der wenigstens einen starren Zone 40 ist die Kunststoffmatrix 29 durch einen duromeren Kunststoff KD gebildet oder enthält einen duromeren Kunststoff KD (Figuren 7, 12 und 13). Aufgrund der unterschiedlichen Kunststoffe erhält das Bewehrungsgitterelement 20 in der wenigstens einen flexiblen Zone 41 eine elastisch biegbare Gestalt, während es in der wenigstens einen starren Zone 40 starr ist. Zur Aussteifung werden keine zusätzlichen Versteifungskörper oder separate Bauelemente benötigt. Vielmehr wird das Tränken der Kunststofffaserbündel 28 bzw. deren Beschichten mit einem Kunststoff KE bzw. KD dazu verwendet, die gewünschte Eigenschaft in der betreffenden Zone 40 bzw. 41 zu erzielen.

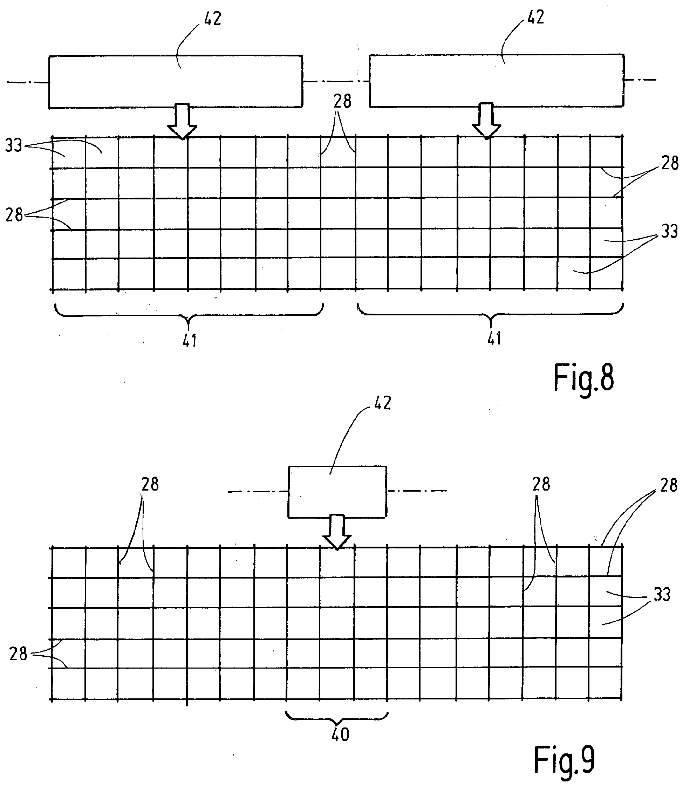

Zur Herstellung des Bewehrungsgitterelements 20 kann zunächst das gesamte Gelege 36 in einem Bad mit einem elastomeren Kunststoff KE getränkt werden. Anschließend kann der elastomere Kunststoff KE ausgehärtet werden. In einem nachfolgenden Schritt kann gezielt in der wenigstens einen starren Zone 40 der vorhandene elastomere Kunststoff KE mit dem duromeren Kunststoff KD beschichtet werden, beispielsweise durch Auftragen mit einer oder mehreren Walzen 42, wie es schematisch in Figur 9 gezeigt ist. Auch ein auf den starren Bereich 40 begrenztes Aufsprühen oder ein anderes Auftragen ist möglich.

Dadurch wird in der wenigstens einen starren Zone 40 der duromere Kunststoff KD als Beschichtung um die mit dem elastomeren Kunststoff KE getränkten Faserbündel 28 herum angeordnet, was stark schematisiert in Figur 11 veranschaulicht ist.

Es ist auch möglich, die Kunststoffe im Wesentlichen begrenzt auf die betreffenden Zonen 40 bzw. 41 aufzutragen, beispielsweise einer oder mehrerer Walzen 42, wie es schematisch in den Figuren 8 und 9 veranschaulicht ist. Die Reihenfolge ist dabei wählbar. Entweder kann zunächst der elastomere Kunststoff KE in der wenigstens einen flexiblen Zone 41 oder der duromere Kunststoff KD in der wenigstens einen starren Zone 40 aufgetragen werden. Anstelle der in den Figuren 8 und 9 verwendeten Walzen 42 können auch andere Mittel zum Auftragen eingesetzt werden.

Es ist dabei bevorzugt, wenn sich die Kunststoffe unmittelbar aneinander angrenzender Zonen in einem Überlappungsbereich 45 überlappen. Dadurch wird sichergestellt, dass die Faserbündel 28 vollständig in eine Kunststoffmatrix 29 eingebunden sind und im Grenzbereich zwischen einer starren Zone 40 und einer flexiblen Zone 41 kein Spalt oder Zwischenraum zwischen den Kunststoffen KE, KD verbleibt. Im Überlappungsbereich 45 ist beispielsgemäß der duromere Kunststoff KD als äußere Beschichtung auf den elastomeren Kunststoff KE aufgetragen. Dies wird dadurch erreicht, dass zunächst der elastomere Kunststoff KE und anschließend der duromere Kunststoff KD aufgetragen wird. Auch eine umgekehrte Reihenfolge ist möglich. Dann überdeckt der elastomere Kunststoff KE im Überlappungsbereich 45 den duromeren Kunststoff KD.

Das mit Kunststoff KE bzw. KD getränkte Gelege 36 wird zur Bildung des Bewehrungsgitterelements 20 ausgehärtet. Das Aushärten kann entweder in einem gemeinsamen Schritt erfolgen, wenn die Kunststoffe KE und KD in beiden Zonen 40, 41 aufgetragen wurden oder alternativ in einem ersten Schritt nach dem Auftragen eines Kunststoffes KE bzw. KD und anschließend in einem zweiten Schritt nochmals nach Auftragen des jeweiligen anderen Kunststoffes KD bzw. KE.

Das Aushärten kann durch Zufuhr von elektromagnetischer Strahlung und/oder thermischer Strahlung und/oder Kontaktwärmeleitung erfolgen. Vorzugsweise wird zur Definition der Form der wenigstens einen starren Zone 41 zumindest das Aushärten des duromeren Kunststoffes KD in einem Formwerkzeug durchgeführt, die beispielsweise beheizbar ist.

Das Bewehrungsgitterelement 20 kann in unterschiedlichen Varianten hergestellt und eingesetzt werden. Bei dem in den Figuren 1 und 2 veranschaulichten Ausführungsbeispiel weist das Bewehrungsgitterelement 20 eine und beispielsgemäß genaue eine elastische Zone 41 auf, die zwischen zwei starren Zonen 40 angeordnet ist und die beiden starren Zonen 40 vollständig voneinander trennt. Die elastische Zone 41 erstreckt sich in Längsrichtung L vollständig entlang der gesamten Länge des Bewehrungsgitterelements 20. In Querrichtung Q hat die elastische Zone 41 eine Breite b. Bei dem veranschaulichten Ausführungsbeispiel entspricht die Breite b der elastischen Zone 41 in etwa der Breite y einer Masche 33. Die elastische Zone 41 ist somit in Querrichtung Q relativ klein. Werden die beiden starren Zonen 40 aus einer gemeinsamen Ebene um eine Biegeachse A, die sich parallel zur Längsrichtung L erstreckt, aufeinander zubewegt, entsteht in der flexiblen Zone 41 im Bereich der Biegekante A eine Krümmung mit einem relativ kleinen Radius. Das Bewehrungsgitterelement 20 kann daher zur Bewehrung von Eckbereichen des Baukörpers 21 eingesetzt werden.

In Abwandlung zum Ausführungsbeispiel gemäß der Figuren 1 und 2 kann die Breite b der flexiblen Zone 41 auch über mehrere Maschen vergrößert werden, so dass sich beim Biegen in der flexiblen Zone 41 ein größerer Radius ergibt. Dadurch können Baukörper 21 im Bereich von runden Abschnitten verstärkt werden.

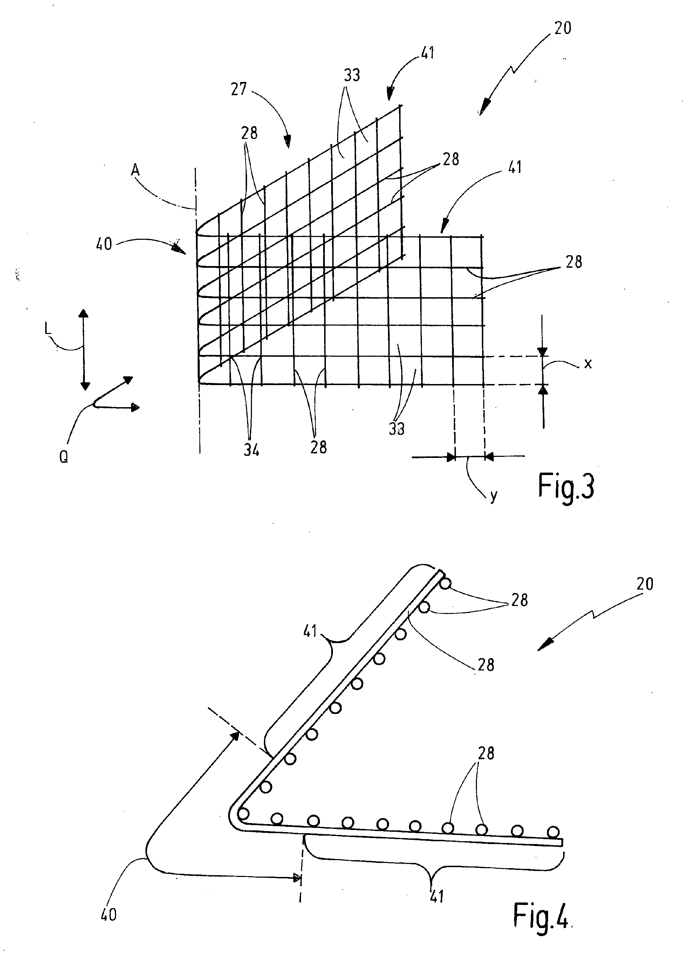

Ein weiteres Ausführungsbeispiel eines Bewehrungsgitterelements 20 ist in den Figuren 3 und 4 gezeigt. Dort weist das Bewehrungsgitterelement 20 eine und beispielsgemäß genau eine starre Zone 40 auf, die zwischen zwei flexiblen Zonen 41 angeordnet ist und die flexiblen Zonen 41 vollständig voneinander trennt. Die starre Zone 40 erstreckt sich in Längsrichtung L vollständig über die gesamte Länge des Bewehrungsgitterelements 20. Die starre Zone 40 gibt an der Biegekante A einen Radius und/oder Winkel vor. Daran schließen sich jeweils eine flexible Zone 41 an. Mit einem solchen Bewehrungsgitterelement 20 kann ein Eck- oder Krümmungsbereich eines Baukörpers 21 verstärkt werden, wobei sich durch die flexiblen Zonen 41 im Anschluss an eine Ecke oder einer Krümmung das Bewehrungsgitterelement 20 variabel an unterschiedliche Formen bzw. Konturen des Baukörperelements 21 anpasst.

In Abwandlung zu den veranschaulichten Ausführungsbeispielen können Bewehrungsgitterelemente 20 mit beliebig vielen flexiblen und/oder starren Zonen 41, 40 ausgeführt werden. Die Abmessung des Bewehrungsgitterelements 20 in Längsrichtung L und in Querrichtung Q ist beliebig. Die beispielhafte Darstellung in den Figuren, wonach die Abmessung in Längsrichtung L kleiner ist als in Querrichtung Q ist lediglich beispielhaft.

Als elastomerer Kunststoff KE wird beim Ausführungsbeispiel Kautschuk verwendet, wie etwa Styrol-Butadien-Kautschuk (SBR) und/oder Chloropren-Kautschuk (CR) und/oder Ethylen-Propylen-Dien-Kautschuk (EPDM). Als duromerer Kunststoff KD wird vorzugsweise ein Kunstharz verwendet, wie etwa Epoxidharz und/oder Polyurethanharz.

Die Erfindung betrifft ein Bewehrungsgitterelement 20 zum Einbetten in eine Zementmatrix 22 eines Baukörpers 21, vorzugsweise in einem Eckbereich oder einem gekrümmten Bereich des Baukörpers 21. Das Bewehrungsgitterelement 20 hat eine gitterförmige Anordnung 27 aus Faserbündeln 28, die in eine Kunststoffmatrix 29 eingebettet sind. Das Bewehrungsgitterelement 20 hat wenigstens eine starre Zone 40 und wenigstens eine flexible Zone 41. In der wenigstens einen flexiblen Zone 41 besteht die Kunststoffmatrix 29 aus einem elastomeren Kunststoff KE. Demgegenüber weist die Kunststoffmatrix 29 in der wenigstens einen starren Zone 40 einen duromeren Kunststoff KD auf. Die biegbare oder starre Form des Bewehrungsgitterelements 20 ergibt sich daher durch den Aufbau der Kunststoffmatrix. Zusätzliche Versteifungskörper oder Versteifungselemente, die mit der gitterförmigen Anordnung 27 verbunden werden, können entfallen. Das Bewehrungsgitterelement 20 lässt sich bei der Herstellung eines Baukörpers 21 an die jeweiligen Gegebenheiten anpassen und vereinfacht die Handhabung.

### Bezugszeichenliste:

- 20: Bewehrungsgitterelement
- 21: Baukörper
- 22: Zementmatrix
- 23: zusätzliche Bewehrung

- 27: gitterförmige Anordnung
- 28: Faserbündel
- 29: Kunststoffmatrix
- 30: Filament
- 31: erste Gruppe
- 32: zweite Gruppe
- 33: Masche
- 34: Kreuzungsstelle
- 35: Verbindungsfaden
- 36: Gelege

- 40: starre Zone
- 41: flexible Zone
- 42: Walze

- 45: Überlappungsbereich

- b: Breite der elastischen Zone
- KD: duromerer Kunststoff
- KE: elastomerer Kunststoff
- L: Längsrichtung
- Q: Querrichtung
- x: Länge der Masche
- y: Breite der Masche

## Patentansprüche

1. Bewehrungsgitterelement (20) zum Einbetten in eine Zementmatrix (22) eines Baukörpers (21),
mit einem gitterförmigen Anordnung (27) aus Faserbündeln (28), die in eine Kunststoffmatrix (29) eingebettet sind, wobei sich eine Gruppe (31) von Faserbündeln (28) in einer ersten Richtung (L) und die eine weitere Gruppe (32) von Faserbündeln (28) in einer zweiten Richtung (Q) erstreckt,
**dadurch gekennzeichnet, dass** das Bewehrungsgitterelement (20) wenigstens eine starre Zone (40) und wenigstens eine flexible Zone (41) aufweist,
dass die Kunststoffmatrix (29) in der flexible Zone (41) aus einem elastomeren Kunststoff (KE) gebildet ist,
und dass die Kunststoffmatrix (29) in der starren Zone (40) einen duromeren Kunststoff (KD) aufweist.

2. Bewehrungsgitterelement nach Anspruch 1,
**dadurch gekennzeichnet, dass** zwei starre Zonen (40) vorhanden sind, die mittels einer dazwischen angeordneten flexiblen Zone (41) vollständig voneinander getrennt sind.

3. Bewehrungsgitterelement nach Anspruch 1 oder 2,
**dadurch gekennzeichnet, dass** zwei flexible Zonen (41) vorhanden sind, die mittels einer dazwischen angeordneten starren Zone (40) vollständig voneinander getrennt sind.

4. Bewehrungsgitterelement nach einem der vorhergehenden Ansprüche,
**dadurch gekennzeichnet, dass** die wenigstens eine flexible Zone (41) und eine angrenzende starre Zone (40) einen Überlappungsbereich (45) aufweisen.

5. Bewehrungsgitterelement nach Anspruch 4,
**dadurch gekennzeichnet, dass** im Überlappungsbereich (45) der duromere Kunststoff (KD) außen auf dem elastomeren Kunststoff (KE) angeordnet ist.

6. Bewehrungsgitterelement nach einem der vorhergehenden Ansprüche,
**dadurch gekennzeichnet, dass** die Kunststoffmatrix (29) in der starren Zone (40) aus einem duromeren Kunststoff (KD) gebildet ist.

7. Bewehrungsgitterelement nach einem der Ansprüche 1 bis 5,
**dadurch gekennzeichnet, dass** die Kunststoffmatrix (29) in der starren Zone (40) einen elastomeren Kunststoff (KE) aufweist, der mit einem duromeren Kunststoff (KD) beschichtet ist.

8. Bewehrungsgitterelement nach einem der vorhergehenden Ansprüche,
**dadurch gekennzeichnet, dass** der elastomere Kunststoff (KE) Kautschuk enthält.

9. Bewehrungsgitterelement nach Anspruch 8,
**dadurch gekennzeichnet, dass** der Kautschuk aus Styrol-Butadien-Kautschuk (SBR) und/oder Chloropren-Kautschuk (CR) und/oder Ethylen-Propylen-Dien-Kautschuk (EPDM) besteht.

10. Bewehrungsgitterelement nach einem der vorhergehenden Ansprüche,
**dadurch gekennzeichnet, dass** der duromere Kunststoff (KD) ein Kunstharz enthält.

11. Bewehrungsgitterelement nach Anspruch 10,
**dadurch gekennzeichnet, dass** das Kunstharz aus Epoxidharz und/oder Polyurethanharz besteht.

12. Bewehrungsgitterelement nach einem der vorhergehenden Ansprüche,
**dadurch gekennzeichnet, dass** die gitterförmige Anordnung (27) der Faserbündel (28) ein Gelege (36) bildet.

13. Bewehrungsgitterelement nach einem der vorhergehenden Ansprüche,
**dadurch gekennzeichnet, dass** die Faserbündel (28) Fasern und/oder Filamente (30) aufweisen, die Aramid und/oder Glas und/oder Karbon enthalten.

14. Baukörper (21)
mit einer Zementmatrix (22),
mit wenigstens einem Bewehrungsgitterelement (20) nach einem der vorhergehenden Ansprüche, das in die Zementmatrix (22) eingebettet ist.

15. Verfahren zur Herstellung eines Bewehrungsgitterelements (20) nach einem der Ansprüche 1 bis 13, mit folgenden Schritten:
- Bereitstellen einer gitterförmigen Anordnung (27) aus Faserbündeln (28),
- Tränken der Faserbündel (28) der gitterförmigen Anordnung (27) zumindest in dem Bereich, der innerhalb der wenigstens einen flexiblen Zone (41) liegt, mit einem elastomeren Kunststoff (KE),
- Tränken oder Beschichten der Faserbündel (28) der gitterförmigen Anordnung (27) zumindest in dem Bereich, der innerhalb der wenigstens einen starren Zone (40) liegt, mit einem duromeren Kunststoff (KD),
- Aushärten des duromeren Kunststoffs (KD) zur Bildung der starren Zone (40).

## Claims

1. Reinforcement grid element (20) for embedding in a cement matrix (22) of a structural element (21),
with a grid-like arrangement (27) of fibre bundles (28) which are embedded in a plastic matrix (29), wherein a group (31) of fibre bundles (28) extends in a first direction (L) and a further group (32) of fibre bundles (28) extends in a second direction (Q), **characterised in that**
the reinforcement grid element (20) has at least one rigid zone (40) and at least one flexible zone (41),
that the plastic matrix (29) is formed from an elastomer plastic (KE) in the flexible zone (41),
and that the plastic matrix (29) comprises a duromer plastic (KD) in the rigid zone (40).

2. Reinforcement grid element according to claim 1, **characterised in that** two rigid zones (40) are present which are completely separated from each other by a flexible zone (41) arranged in between.

3. Reinforcement grid element according to claim 1 or 2, **characterised in that** two flexible zones (41) are present which are completely separated from each other by a rigid zone (40) arranged in between.

4. Reinforcement grid element according to any of the preceding claims, **characterised in that** the at least one flexible zone (41) and an adjacent rigid zone (40) have an overlap region (45).

5. Reinforcement grid element according to claim 4, **characterised in that** in the overlap region (45), the duromer plastic (KD) is arranged on the outside on the elastomer plastic (KE).

6. Reinforcement grid element according to any of the preceding claims, **characterised in that** in the rigid zone (40), the plastic matrix (29) is formed from a duromer plastic (KD).

7. Reinforcement grid element according to any of claims 1 to 5, **characterised in that** in the rigid zone (40), the plastic matrix (29) comprises an elastomer plastic (KE) which is coated with a duromer plastic (KD).

8. Reinforcement grid element according to any of the preceding claims, **characterised in that** the elastomer plastic (KE) contains rubber.

9. Reinforcement grid element according to claim 8, **characterised in that** the rubber consists of styrene butadiene rubber (SBR) and/or chloroprene rubber (CR) and/or ethylene propylene diene rubber (EPDM).

10. Reinforcement grid element according to any of the preceding claims, **characterised in that** the duromer plastic (KD) contains a synthetic resin.

11. Reinforcement grid element according to claim 10, **characterised in that** the synthetic resin consists of epoxy resin and/or polyurethane resin.

12. Reinforcement grid element according to any of the preceding claims, **characterised in that** the grid-like arrangement (27) of the fibre bundles (28) forms a laid structure (36).

13. Reinforcement grid element according to any of the preceding claims, **characterised in that** the fibre bundles (28) comprise fibres and/or filaments (30) which contain aramid and/or glass and/or carbon.

14. Structural element (21) with a cement matrix (22), with at least one reinforcement grid element according to any of the preceding claims which is embedded in the cement matrix (22).

15. Method for producing a reinforcement grid element (20) according to any of claims 1 to 13, with the following steps:
- provision of a grid-like arrangement (27) of fibre bundles (28),
- saturation of the fibre bundles (28) of the grid-like arrangement (27) with an elastomer plastic (KE) at least in the region which lies inside the at least one flexible zone (41),
- saturation or coating of the fibre bundles (28) of the grid-like arrangement (27) with a duromer plastic (KD) at least in the region which lies inside the at least one rigid zone (40),
- hardening of the duromer plastic (KD) to form the rigid zone (40).

## Revendications

1. Elément de treillis d'armature (20) destiné à être incorporé dans une matrice de ciment (22) d'un corps de construction (21),
comprenant une structure en forme de treillis (27) constituée de faisceaux de fibres (28) qui sont incorporés dans une matrice en matière plastique (29), un groupe (31) de faisceaux de fibres (28) s'étendant dans une première direction (L), et l'autre groupe (32) de faisceaux de fibres (28) s'étendant dans une deuxième direction (Q),
**caractérisé en ce que** l'élément de treillis d'armature (20) présente au moins une zone rigide (40) et au moins une zone souple (41),
**en ce que** dans la zone souple (41), la matrice en matière plastique (29) est constituée d'une matière plastique élastomère (KE),
et **en ce que** dans la zone rigide (40), la matrice en matière plastique (29) présente une matière plastique duromère (KD).

2. Elément de treillis d'armature selon la revendication 1, **caractérisé en ce qu'**il est prévu deux zones rigides (40) qui sont complètement séparées l'une de l'autre par une zone souple (41) disposée entre elles.

3. Elément de treillis d'armature selon la revendication 1 ou 2, **caractérisé en ce qu'**il est prévu deux zones souples (41) qui sont complètement séparées l'une de l'autre par une zone rigide (40) disposée entre elles.

4. Elément de treillis d'armature selon l'une des revendications précédentes, **caractérisé en ce que** la zone souple (41), au nombre d'au moins une, et une zone rigide (40) adjacente présentent une portion de chevauchement (45).

5. Elément de treillis d'armature selon la revendication 4, **caractérisé en ce que** dans la portion de chevauchement (45), la matière plastique duromère (KD) est disposée à l'extérieur sur la matière plastique élastomère (KE).

6. Elément de treillis d'armature selon l'une des revendications précédentes, **caractérisé en ce que** dans la zone rigide (40), la matrice en matière plastique (29) est constituée d'une matière plastique duromère (KD).

7. Elément de treillis d'armature selon l'une des revendications 1 à 5, **caractérisé en ce que** dans la zone rigide (40), la matrice en matière plastique (29) présente une matière plastique élastomère (KE) qui est recouverte d'une matière plastique duromère (KD).

8. Elément de treillis d'armature selon l'une des revendications précédentes, **caractérisé en ce que** la matière plastique élastomère (KE) contient du caoutchouc.

9. Elément de treillis d'armature selon la revendication 8, **caractérisé en ce que** le caoutchouc est constitué de caoutchouc butadiène-styrène (SBR) et/ou de caoutchouc chloroprène (CR) et/ou de caoutchouc éthylène-propylène-diène (EPDM).

10. Elément de treillis d'armature selon l'une des revendications précédentes, **caractérisé en ce que** la matière plastique duromère (KD) contient une résine synthétique.

11. Elément de treillis d'armature selon la revendication 10, **caractérisé en ce que** la résine synthétique est constituée de résine époxy et/ou de résine polyuréthane.

12. Elément de treillis d'armature selon l'une des revendications précédentes, **caractérisé en ce que** la structure en forme de treillis (27) constitue une structure non tissée en nappe (36).

13. Elément de treillis d'armature selon l'une des revendications précédentes, **caractérisé en ce que** les faisceaux de fibres (28) présentent des fibres et/ou des filaments (30) qui contiennent de l'aramide et/ou du verre et/ou du carbone.

14. Corps de construction (21)
comprenant une matrice de ciment (22),
comprenant au moins un élément de treillis d'armature (20) selon l'une des revendications précédentes, qui est incorporé dans la matrice de ciment (22).

15. Procédé de fabrication d'un élément de treillis d'armature (20) selon l'une des revendications 1 à 13, comprenant les étapes suivantes :
- mise en place d'une structure en forme de treillis (27) constituée de faisceaux de fibres (28),
- imprégnation des faisceaux de fibres (28) de la structure en forme de treillis (27), au moins dans la région qui se situe à l'intérieur de la zone souple (41), au nombre d'au moins une, avec une matière plastique élastomère (KE),
- imprégnation ou recouvrement des faisceaux de fibres (28) de la structure en forme de treillis (27), au moins dans la région qui se situe à l'intérieur de la zone rigide (40), au nombre d'au moins une, avec une matière plastique duromère (KE),
- durcissement de la matière plastique duromère (KD) pour former la zone rigide (40).
